Europäisches Patentamt

European Patent Office

Office européen des brevets

(11) Publication number: **0 668 484 A1**

(12) **EUROPEAN PATENT APPLICATION**
published in accordance with Art.
158(3) EPC

(21) Application number: 94924887.6

(22) Date of filing: **12.08.94**

(86) International application number:
**PCT/ES94/00078**

(87) International publication number:
**WO 95/06233 (02.03.95 95/10)**

(51) Int. Cl.⁶: **G01C 17/20**

(30) Priority: **24.08.93 ES 9301851**
**03.11.93 ES 9302288**
**10.01.94 ES 9400032**

(43) Date of publication of application:
**23.08.95 Bulletin 95/34**

(84) Designated Contracting States:
**CH DE FR GB IT LI SE**

(71) Applicant: **Soto Garcia, Diodoro**
**Romero Robledo 13,5 , C.,**
**E-28008 Madrid (ES)**

(72) Inventor: **Soto Garcia, Diodoro**
**Romero Robledo 13,5 , C.,**
**E-28008 Madrid (ES)**

(74) Representative: **Garcia Cabrerizo, Francisco**
**OFICINA GARCIA CABRERIZO S.L.**
**Vitruvio 23**
**E-28006 Madrid (ES)**

(54) **MANUAL COMPASS-CLINOMETER.**

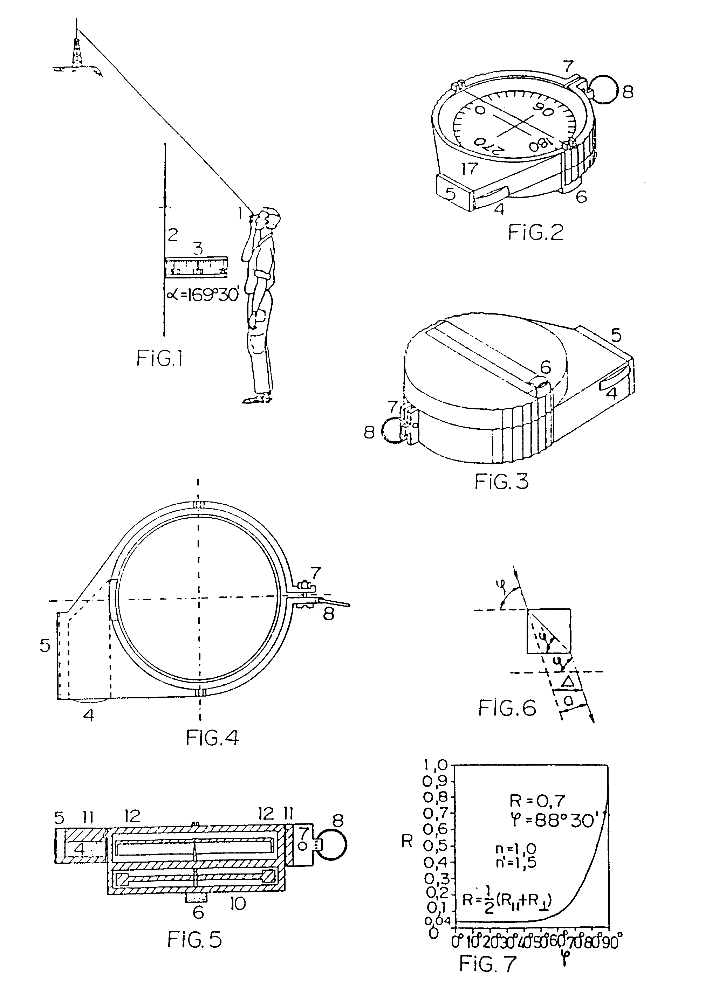

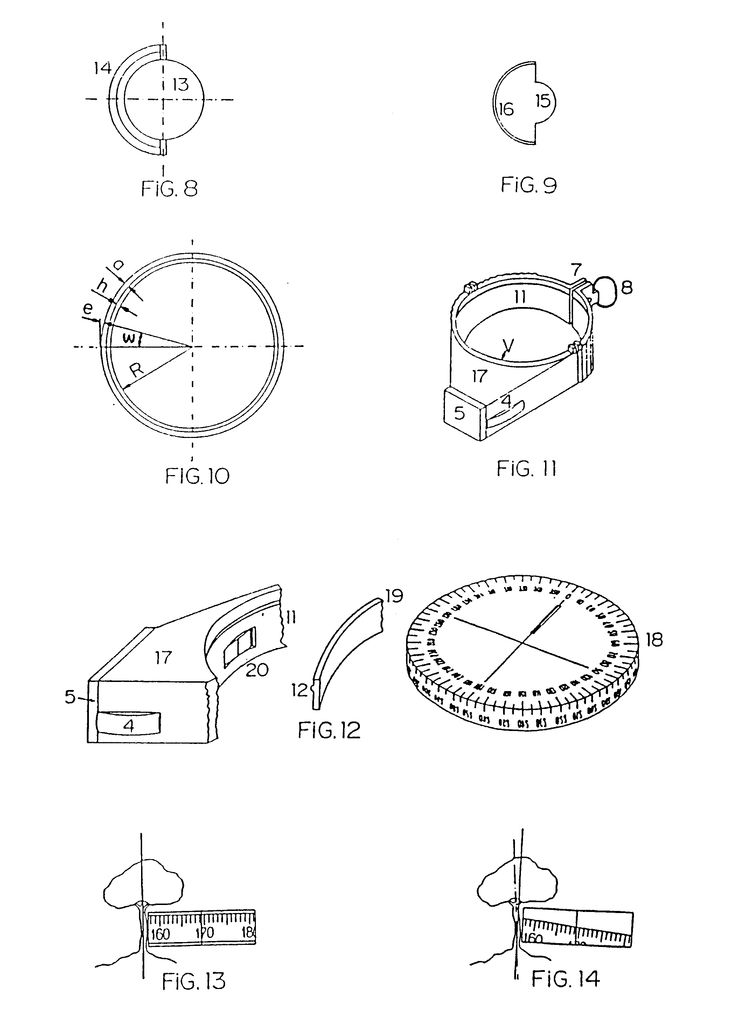

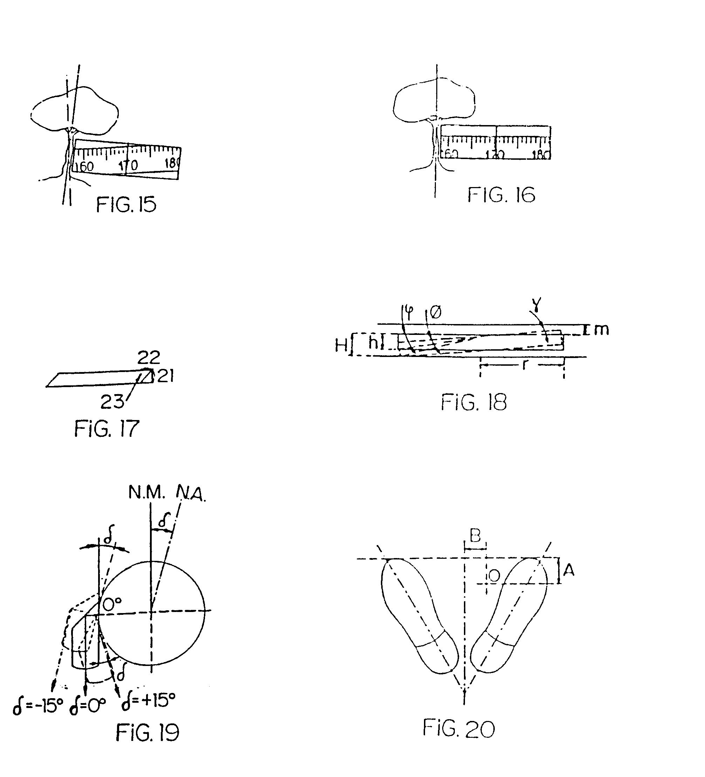

(57) Manual compass-clinometer (fig.1 and 3) for the excentric measuring of bearings or azimuths, providing for the levelling of the instrument in the planes N.S. and E.W.(fig 13) and the collimation of the object (fig. 1) through vertical angles between 0° and ± 90°, providing the measurement of topographic and parietal slopes, with reading images in the optical infinite through proximal lenses; the manual compas-clinometer is comprised of two cylindrical boxes which are arranged back-to-back at their base, the upper box containing a stabilizing liquid and the magnetic disc (fig. 5/9) joined at its periphery to a cylindrical sheet (fig. 12/18) with the angular graduation on both, but with the zero-origin of the cylinder out of phase in a quadrant of the magnetic North. The reading loupe (4) and the collimator (5) are contiguous, with their optical axes parallel to the plane N.S. It has a preripheral transposition device (fig. 11) in order to cancel the magnetic variation angle. The lower box contains the clinometric disco-level (fig. 5/10) and a double reading lens on a beam dividing cube (fig. 3/6).

FiG.2

## 1. BACKGROUND

On 24 August 1993 an application was lodged at the Spanish Patent Office applying for letters patent on "MULTIPLE IMAGE ELBOWED EYEPIECE FOR DISC CLINOMETRIC COMPASSES", under number P.9.301.851, expanded on 3 November 1993 with the additional alternatives set out under number P.9.302.288 and for a second time on 10 January 1994 under number 9.400.032.

## 2. OBJECT AND TECHNICAL SECTOR

This manual compass-clinometer allows reciprocal obtention of alignment and the slope measuring under any bearing, under any slope between 0° and ± 90° and from any point, with the instrument levelled, when carrying out land surveying, geology, civil works prospecting and setting out, forestry, agricultural and mining, architectural and military related work.

## 3. PRIOR STATE OF THE ART

In prior manual compasses, collimation is direct and central using aiming sights, through mirror reflection or through optical reading with a vertical field reduced in ascending sights (approximately 20°) and even more reduced in the descending ones (approximately 15°). This limitation does not satisfy the requirements of geologists, forestry engineers, military personnel, civil engineers and architects working in mountainous terrain where the slopes may reach and even exceed inclinations of 45°, reaching even 90° in the case of cliffs and vertical walls.

Mirror collimation does furthermore present two major disadvantages: it rotates the image upside-down thus making it more difficult to identify a point and, due to its small size and surface, as soon as the eye is taken away from the mirror the observed field is substantially reduced and it is then nearly impossible to identify the objective point due to the non-availability of the wider references that direct viewing gives us.

Optical reading devices have a significant angular limitation regarding collimation. Neither is there a manual compass that would allow bringing together into two linked loupes that may be indistinctly used by people with emmetropic (normal) and corrected ametropic (myopic and hypermetropic) eyesight the light rays of the three objects which images are needed to determine a bearing: collimated objects, level to ascertain compass horizontality and value of the corresponding magnetic angle.

Normal clinometric compasses tend to incorporate a gimbal ring suspension with a graduated scale on the objective focal plane made of a Stanhope lens or a graduated disc which origin zero is positioned, through gravity, on the horizontal or vertical plane thanks to a small mass located in a periphery point.

A 90° reflecting prism, forming part of a Stanhope loupe, and attached to the external case of the instrument, act as a collimator and allows reading trigonometric tangents or inclination angles.

Other geologic compasses do contain a gravity clinometer with turning axis coinciding with the suspension swivel pin of the needle which reading is effected directly above a graduated limb located on the bottom of the case, tilting the latter 90°.

The first two systems allow reading slopes of an imaginary line that passes through the object being viewed and through the eye of the observer, but do not allow, due to the placement of the eye, its application to the measurement of stratigraphic slopes in parietal situation or above straight edges.

The third system may be used for the measurement of parietal but not topographic slopes, due to not reaching, the eye of the observer, the clinometer in this position.

The fore mentioned limitations and wants in respect of clinometric compasses currently known cause the need of new object collimation, level viewing and bearing reading devices placed together in a double eyepiece both for the compass and for the clinometer.

Thus, compass use is more comfortable, more certain, more precise, causes less eye fatigue and saves observation time with the added benefit that the pendular disc clinometer allows double topographic and parietal slope reading to be effected by just one observer.

On the other hand, the measurement of tree top projection during forestry inventories is based upon the determination of random peripheral points as per radial alignments defined by magnetic angular quadrants, sextants and octants for which use the bearings must be differentiated, either by way of different colors in the division of the compass limb, or through the assignment of ordinals next to the angular values, being able to select, for instance, Roman numbers from I to VIII.

## 4. DISCLOSURE AND DESCRIPTION

This instrument is made up of a clinometer and a magnetic compass of the disc submerged in damping liquid type with double limb: a flat one engraved upon the disc and a cylindrical one, joined to the outside by its periphery. The latter one features a 90° angular shift in relation to the magnetic North because of the eccentricity condition of the collimator and has a transparent window on the side of the case opposite and with coinciding axis in respect of rectangular frame and a vertical central index-line engraved on the inside surface of the reading prism-loupe.

On the external side of the prism-loupe is located a vertical plane collimator with an angular field of some 180°.

The horizontal equilibrium of the disc in the damping liquid allows transmitting same to the whole instrument through the parallelism between the two engraved horizontal lines enclosing the cylindrical grading and that of the rectangular frame engraved on the prism.

The eyepiece formed by the two loupes allows nearly simultaneous viewing and collimation of the object, at the same time that allows to ascertain the horizontality of the levelling references and reading off the bearing.

It is fitted with a reading index transposition ring around the compass ring that is used to cancel the value of the magnetic declination and to enable reading astronomical azimuths.

On the base of the case is attached a pendular disc clinometer which reading is effected through the line-index engraved on the internal surface of the prism ending at the opposite end, in a double eyepiece beam dividing cube: one at the prism axis, to read terrain slopes and the other one, at a 90° angle in respect of the former, to read parietal stratigraphic inclinations in geological jobs.

The gradient meter may also be used to materialize vertical point projection of tree tops periphery during forestry inventories in combination with the compass that determines its polar coordinates.

Throughout this specification the terms clinometer and gradient meter shall be indistinctly used because limb graduation may be represented by the value of the tangents or by that of its angles, of by both of them at the same time.

The main mechanical and optical elements making up the compass-clinometer are studied below in order to demonstrate their functional feasibility.

### 4.1. Compass, instrument horizontality and maximum disc inclination.

According to many tests carried out by several persons of different age groups and occupations with a needle clinometer to appreciate its sensibility, through reckoning and without horizontality material reference, angular deviations are:

$$\alpha \text{ max.} = 4°$$
$$\alpha = 2° 10'$$

and we may furthermore observe the odd phenomenon of it being larger in the elevation than in the depression angles.

The manual compass disc inclination angle $\alpha$ to prevent bearing alteration is ± 4°, according to practical tests.

For a 10 mm limb viewing opening length, the difference $\underline{h}$ produced at its end, with an inclination $\alpha$ = 4° in the N - S axis shall then be:

$$h = 10. \text{ tag } 4° = 0.7 \text{ mm}$$

and this dimension is abundantly perceived by the human eye that distinguishes 0.2 mm, and this does still not take into account the image enlargement produced by the loupe.

Therefore the hand held compass may be levelled with a maximum level of error in the N - S axis of:

$$\alpha_n \frac{0.2}{10} x3,438' = 68.76' = 1°9'$$

which has no repercussion in the bearing.

Regarding the horizontality of the E - W axis, the error is measured by the value of disc inclination in that direction. for a 20 mm disc radio and $\alpha$ = 4°

$$h = 20. \text{tag } 4° = 1.4 \text{ mm}$$

As we have already mentioned, the human eye appreciates 0.2 mm and this deviation of the projection of the limb horizontal lines within the visual frame lines allows us to verify a maximum error of:

$$\propto_e = \frac{0.2}{20} x3,438' = 34.38'$$

without perceptible bearing alteration.

On the other hand, the maximum pulse induced angular movement of the compass holding hand lifted up to eye level is not greater than ± 15', a value considerably lower than the minimum angular sensibility of the N - S and E - W axis.

Resolution under direct viewing conditions, without loupe, has been considered for the two axis, and this resolution shall be enhanced by loupe magnification.

Figure 18 illustrates the disc in the horizontal position and with its maximum inclination within the case that allows us to effect its geometrical calculation.

The meaning of the letters is:

H = height between the bottom of the case and the upper plane of the magnetic disc.

h = height of the magnetic cylindrical sheet.

r = magnetic disc radius.

m = maximum gap between the upper disc plane and the internal compass lid surface.

$\gamma$ = maximum disc inclination angle.

$\varphi$ = angle formed by the hypotenuse and the larger other side of the maximum triangle projected upon a quadrant of the cylindrical sheet.

$\phi$ = Maximum inclination angle of the hypotenuse of the fore mentioned triangle.

If we assume:

H = 5.75 mm

h = 4.00 mm

r = 20.00 mm

m = 1.75 mm

we do then obtain the following angular values:

$$tag\varphi = \frac{h}{r} = \frac{4}{20} = 0.20000; \varphi = 11°18'36''$$

$$\sin\phi = \frac{H}{R} = \frac{5.75}{20} = 0.2875; \phi = 16°42'30''$$

The maximum inclination over the bottom case lid is equal to the angular difference:

$$\phi - \varphi = 5°23'54''$$

The inclination referred to the upper lid would be:

4

$$\sin\gamma = \frac{m}{r} = \frac{1.75}{20} = 0.08750; \gamma = 5°1'$$

As this angle $\gamma$ is smaller than $\phi$ - $\varphi$, maximum inclination would then be 5° 1'.

In order to prevent the disc steeple from coming off the swivel pin, it must have a height slightly higher than the distance between the upper plane of the disc and the cover that is m = 1.75 mm. A 2.00 mm distance is suggested.

At its maximum inclination, the lower cylinder edge shall be at a distance l from the axis:

l = r . cos $\gamma$ + h. tag $\gamma$ . cos $\gamma$ = r . cos $\gamma$ + h sin $\gamma$ = 20 x 0.99617 + 4 x 0.08744 = 20.27 mm

And, as the gap between the edge of the limb and the internal case wall is 0.70 mm, there is still a 20.70 - 20.27 = 0.43 safety gap.

4.2. Reading prism-loupe

If we select a $\emptyset$ = 40 mm disc-compass and engrave upon it the sexagesimal degree divisions, numbered in 10° steps, it shall then correspond to each of them a space of:

$$\frac{\pi . \phi}{360°} = \frac{3.14 x 40}{360} = 0.348 mm$$

which is a dimension easy to engrave and easy to read with the help of a small magnification. It would be advisable for the reading window to display an angular field of at least 30°, so as to be able to see at least three engraved numerals and ascertain their increase trend. Thus, the display window must at least have a length of:

30 x 0.348 = 10.44 mm

The height of the display window, in order to fit the numerals, the dividing lines and the two horizontal lines engraved on the vertical limb must be at least: 4 mm.

This length and height of the viewed portion of the vertical limb are, at the same time, those of the sides of the triangle opposite the hypotenuse of the optical prism with a 10.44 x 4.00 mm loupe surface.

This prism-loupe is calculated in geometrical optics as a flat-convex lens which radius R is a function of the index $n_1$ of the glass used, the air n index and the focal distance f.

The reading planes of this loupe are not coincident because, (fig. 10):

a) the sector of the circular graduated limb of the compass is not flat.

b) The rectangle and reading index engraved on the internal surface of the prism and the circular graded sector are separated by a distance h + a.

c) The central and end beams of the reading sector do not follow the same geometrical path because they differ in the segment e.

If we assume:

h      = 0.70 mm (gap between the disc and the internal compass case surface).

a      = 1.20 mm (compass case thickness).

R      = 20.00 mm.

e      = difference between the hypotenuse and the longer   other side of the right angle triangle defined by the radius R + h + a and the central angle $\omega$ = 30°/2 = 15°

the value e shall be

$$e = \frac{R+h+a}{\cos 15°} - R+h+a = \frac{21.90}{\cos 15°} - 21.90 = 0.77 mm$$

For this last case, the maximum gap between the internal surface of the prism and the graded limb is:

$$h + a + e = 2.67 \text{ mm}$$

If we start off a focal distance f = 25.00 mm, its increase I shall be:

$$I = \frac{250}{f} = 10x$$

and the approximate diameter D of the visual field over the object that the loupe may reach shall be:

$$D = f \times 0.60 = 25.00 \times 0.60 = 15.00 \text{ mm}$$

considerably larger than the 10.44 mm calculated above for the reading window.

The accommodation A of the eye, due to the variation of the convergence of the eye lens, is as per the following formula:

$$A = \frac{1}{dpp.} - \frac{1}{dpr.}$$

where:

dpp = distance to the near eye point.
dpr = distance to the far eye point.

When dpp and dpr are expressed in meters, A makes then reference to the power of the system in dioptries (**D**).

In physiological optics a value of 250 mm is accepted for the near or minimum different vision point.

In this case, and because dpr = ∞; A = 1/0.25 = 4

There is an empirical formula that gives A as a function of age:

$$A_n = 13.5 - 0.2 \, n$$

Applied to the average working age of a person:

$$\frac{25+65}{2} = 45 \, years$$

we get:

$$A_{45} = 13.5 - 0.2 \times 45 = 4.5 \, \textbf{D}$$

The focused depth of field Pc of a loupe, when the object is placed in its focus, is calculated as per the Newton formula:

$$Pc = -f.f'\left(\frac{1}{dpp} - \frac{1}{dpr}\right) = -f.f',A$$

If we assume:

A = 4.5 **D**
f = 0.025, which is the focal length of our loupe.

and we take into account that, because the object remains on the air, f = f', and the formula is reduced to:

$$pc = f'^2 \cdot A$$

and for $A = 4.5\ \mathbf{D}$

$$pc = 0.025^2 \times 4.5 = 0.0028\ m$$

Value greater than $h + a + e = 2.67$ mm, which proves good focusing performance throughout the reading field.

4.3. Transposer turn and repercussion in the displacement of the reading index.

Upon observing figure 19 it is then understood that to determine magnetic bearings the transposer must be placed so that the zero of the oriented limb remains in the index that marks the center of the reading window of the internal side of the prism.

If astronomical azimuths are to be read instead of magnetic bearings, it is then necessary to loosen up the transposer screw and rotate it until the reading index is located over the azimuth value of the alignment being measured or, being this exactly the same, over the magnetic bearing increased or decreased by the value of the local declination angle, depending on whether we are dealing with Western or Eastern declination.

This procedure may be carried out on the field over a known azimuth alignment, or alternatively determining the declination of the place by using a duly updated isogonic line map or by previously consulting an official magnetism center.

In the same figure 19 we may observe that, for a maximum Western declination $\delta = 15°$, the transposer must be turned an angle $\delta$ to the right and then the reading index is moved to an end of the window and its light beam is reflected $90°$ on the edge of the hypotenuse, and also exits out of the edge of the loupe.

In the case of Western declination the index and the beams would move to the opposite reading window and loupe end.

We have adopted a limiting value $\delta = \pm 15°$ in respect of the reading window calculation because the above figure is not exceeded in 90% of inhabited land, as may be ascertained in an isogonic line world map

4.4. Collimator and vertical angular field alternatives.

We have already mentioned that most of the manual compasses available in the market place have an important limitation regarding their vertical angular collimation that causes bearing errors in very steep profiles, a disadvantage solved with our project through three alternatives:

1) Planoparallel glass plate collimator.
2) Circular loupe collimator.
3) Semi-circular loupe collimator.
that are duly studied below

Planoparallel glass plate collimator (figures 6 and 7)

The planoparallel glass plate which calculation we set out below has been considered as a collimator.

The path of the beams through a planoparallel plate for $n_1 = 1.5$; $n = 1.00$ ($n_1$: glass and n: air) and calling $\varphi$ the incidence angle and $\varphi'$ the refraction angle, it is then obtained as per the Snell Law that establishes:

$$n \cdot \sin \varphi = n_1 \sin \varphi'$$

and as the limiting reflection angle $\varphi'$ of the beam refracted in the case under consideration is:

$$\sin\varphi' = \frac{n}{n_1} = \frac{1}{1.5} = 0.6,$$

*whichresultis*:

$$\varphi' = 41°48'$$

if we do not wish to surpass it, the limiting incidence angle $\varphi$ shall be:

$$\sin\varphi = \frac{\sin\varphi' . n_1}{n} = 0.6 x \frac{1.5}{1} = 0.9; where: \varphi = 89°59''$$

which shall then allow us to aim under a vertical angle practically located between 0° and ± 90°.

Reflection polarization loss.

In this case we have another limitation, which is the loss due to reflectance determined by the Brewster Law, applying the Fresnel equations that yield:

$$Ir_{||} = Ir_{||} . Ii/2Ii_{||} = R_{||} . Ii/2$$
$$Ir_{|} = R_{|} . Ii/2$$

Natural light reflectance is:

$$R = Ir/Ii$$

which turns into:

$$R = \frac{Ir_{II} + IR_1}{Ii} = \frac{1}{2}(R_{II} + R_1)$$

which function is represented in figure 7 (Sears and Hecht Zajac) for n = 1.0 and n' = 1.5 and ensures us the possibility of reaching an angle of incidence $\varphi$ = 70° with R = 0.2 and another one of $\varphi$ = 88° 30' with R = 0.7 and, given that: R + T = 1, we arrive to 70° with a transmittance T = 0.8 and to 88° 30' with T = 0.3, which enables operating under these angles under good luminosity conditions.

Furthermore transmittance may be improved by way of a treatment of the glass plate surfaces with a Mg F$_2$ layer.

Vertical plane beam deviation.

In the case that we are considering for the parallel surfaces sheet there is no horizontal plane beam deviation, which ensures us that collimation is correct therein. The same thing does not happen on the vertical plane where there is an image movement $\underline{a}$ and a displacement $\Delta$ as a function of the dimension $\underline{d}$ of the side of the plate, angle $\varphi$ and index n. We are going to calculate them in our example for d = 10 mm and $\varphi$ = 88° 30' (most unfavorable case). The image movement $\underline{a}$ shall then be:

8

$$a=\frac{d.\sin(\varphi-\varphi')}{\cos\varphi'}=\frac{10.\sin(88°30'-41°48')}{\cos41°48'}=9.76\,mm$$

The displacement $\Delta$ shall be:

$$\Delta=\frac{a}{\sin\varphi}=\frac{9.76}{\sin88°30'}=9.76\,mm$$

This image displacement, due to its taking place in the vertical collimation plane, does not affect the bearing but places instead the objective image with a 9.76 mm shift, which for the case of a collimation to a distance of 2 m amounts to an angle of shift of:

$$tag\propto=\frac{9.76}{2.000}=0.00488;\ where\propto=0°16'$$

which is not important at all given that we do not measure vertical angles.

Horizontal collimation error.

The horizontal angular error of this collimator by its reckoning positioning, (without aiming index) according to various tests carried out using a sheet with 10 mm sides and 2 mm thick, has the following values:
maximum: ± 34'
medium: ± 25'
minimum: ± 17'
which are within the angular resolution of the compass which is, approximately, 30'.
Requires some positioning practice.

Dimensions of this collimator.

It is advisable not to exceed 10 mm on the base and a thickness of some 2 mm, equivalent to the pupil opening diameter under normal light conditions. Height h of the plate is a function of $\varphi'$ and of the base.

$$h = b . tag\ \varphi' = 10 \times tag\ 41°\ 48' = 8.49\ mm$$

Circular loupe collimator (figure 8)

It consists of a spherical loupe reduced at its lesser thickness central area, joined by its vertical poles to a semicircular ring made of transparent material, of the same thickness as the loupe and also with a reduced width, on which loupe focusing concavity, and along its axis, a fine line has been engraved. Applying the eye to the loupe with the "split" pupil, that is to say, simultaneously viewing its image and the object, both are projected in the optical infinitum and do appear as just one.

In order no to surpass the 17 mm height allowed by our compass model in the space reserved for the collimator right next to the reading loupe prism, we obtain a diameter of 8 mm for this circular loupe and another of 14 mm for the concave surface of the focusing semi-ring where the index line is engraved. Focus distance is 9 mm and magnification I = 28x.

The difference between the height of the collimator and the diameter of the focusing concavity (17 - 14 = 3 mm) divided by two yields the thickness of the semi-ring, that is to say: 1.50 mm.

The angular and vertical field corresponds to the visual front of the loupe and with the focal semi-ring arch that reach 180°

The angular resolution of the collimation depends upon the thickness of the line engraved upon the focal semi-ring and loupe magnification.

To prevent the resolution from exceeding ± 10', the angle rendered by the projection of the line must not he greater than 15' and, as the loupe magnification is 28x, the thickness e of this line shall then be:

$$e = \frac{\frac{250}{I} x 15'}{\rho'} = \frac{\frac{250}{28} x 15'}{3,438} = 0.04 mm$$

### Semi-circular loupe collimator (fig. 9)

This is based in a semi-circular loupe reduced to a narrow central area joined by its diametral plane to a semi-circular profile planoparallel glass plate, on which loupe focusing periphery has been engraved a fine line on a 180° field.

The focuser edges and its visual field may be reduced somewhat as a variable to this last alternative.

The collimation procedure is similar to the "split" pupil one described for the circular loupe alternative.

So as not to exceed the 17 mm available height, we obtain the following values:

Focuser diameter: 15 mm.

Protecting semi-ring adhered to the focuser: 1 mm thick

Loupe diameter: 8 mm

Focal distance f = 8 mm

$$Magnification I = \frac{250}{8} = 31 x$$

The thickness of the collimator line to prevent the rendered angle from extending beyond 15' shall be:

$$e = \frac{\frac{250}{31} x 15'}{3,438} = 0.035 mm$$

### 4.5. Limb lighting and reading loupe transmission factor.

Given that the light beams that arrive to the limb are going to undergo losses due to the reflection and thickness of the glasses through which they shall travel, we must be aware of them and solve them.

The reflection factor $\rho$ when it goes through $n_1$ and n index borders has as its expression:

$$\rho = (\frac{n_1 - n}{n_1 + n})^2$$

The transmission or transmittance factor $\tau$ is equal to 1 - $\rho$ and referred to the indexes:

$$\tau = \frac{4 \cdot n_1 \cdot n}{(n_1 + n)^2}$$

There is furthermore another absorption loss due to the thickness of the transversed medium which, for glass is approximately 1% for each centimeter.

In our compass the borders of the various n indexes transversed between the compass lid and the end of the loupe are:

| | | |
|---|---|---|
| Compass lid | | 2 |
| Horizontal limb | | 2 |
| Vertical limb | | 2 |
| Side case | | 2 |
| Azimuth transposer ring (side of the prism) | | 1 |
| End of the loupe | | 1 |
| | Total | 10 borders |

We may then consider $n_1$ = 1.50 and n = 1.00 for the various media, with a transmittance,

$$\tau = \left( \frac{4 x 1.50 x 1.00}{(1.50+1.00)^2} \right)^{10} = 0.66$$

Further deducting the loss corresponding to glass thickness - about 25 mm, which amounts to 2.5%, the final transmission factor $\tau$ shall be 0.66 - 0.025 = 0.635.

This 63.5% transmittance for a large contrast limb image: black stripes on a white background shall allow it to be read even in shade conditions, but we may still improve by applying a $MgF_2$ non reflection treatment to each one of the surfaces, which shall reduce reflectance 100 - 63.5 = 36.5 to approximately one fourth, so that $\rho$ shall then be 9% and $\tau$ 91%.

But these indexes shall still improve because the light flow does also come through the slit open between the vertical limb and the compass case wall. The borders are then reduced to:

| | | |
|---|---|---|
| Compass lid | | 2 |
| Side case | | 2 |
| Prism-loupe | | 2 |
| | Total | 6 borders |

Assuming that $n_1$ = 1.50 and n = 1.00 with a small error because the alcohol - silicone index is $\simeq$ 1.37, transmittance then becomes:

$$\tau \left( \frac{4 x 1.50 x 1.00}{(1.50+1.00)^2} \right)^6 = 0.78$$

and $\rho$ = 0.22. The non-reflection treatment shall reduce $\rho$ to 0.055 and $\tau$ = 0.945, which shall allow the bearing to be clearly read.

### 4.6 Compass eccentricity error.

Compass eccentricity produces an angular error $\epsilon$ that we are now going to evaluate.

Given that the minimum limb grading division is 1° and the loupe allows 30' to be comfortably observed, we may then consider this angle as the maximum reading error, further taking into account that the magnetic inertial error in these small compasses do also tend to have that same value.

The eccentricity $\underline{a}$ in our model shall be 25 mm and the minimum usage distance 1 so that $\epsilon$ is not surpassed shall then be:

$$l \rightarrow \frac{a}{\varepsilon} \cdot \rho'$$

Yielding values:

$$l = \frac{0.025}{30'} x 3,438' = 2.86 m$$

In the unlikely case of needing to measure bearings with distances shorter than 2.86 m without exceeding $\epsilon$ = 30', it should then be enough to compensate the eccentricity $\underline{a}$ by parally collimating a point located 0.025 m from the axis of the viewed object.

4.7. Transposer ring and fixing system turning gap.

To calculate the gap that allows the contiguous compass case and transposer ring surfaces to turn and their blocking pressure, we start off an approximate 1.20 mm wall thickness.

The 0.50 mm circular and parallel notch along the periphery (concave in the transposer ring and convex in the compass case).

The internal circular development of the ring, discounting the bolt-flange tightening gap shall be that corresponding to its circumference decreased by 1.00 mm allowed for maximum gap. To place the compass case inside the transposer ring it shall be enough to leave the screw free and then to open the ring slightly until it surrounds the notch and fits into it. Once this is achieved, the bearing reading index shall then be placed above the astronomical azimuth of the collimated point-objective, by turning the ring as required and, once this is achieved, the screw-flange shall then be tightened up until the case and the ring are fixed and unable to rotate.

Assuming a 45.00 mm external case diameter, the development of the internal surface of the ring shall be:

$$\pi (45 - 1) = 138.23 \text{ mm}$$

4.8 Gradient meter. Prism loupe.

For the size considered to be most suitable for the instrument, we obtain:

f = 36 mm
R = 18 mm
I = 7x

Limb division separation and thickness

The diameter of the gradient metering disc is d = 40.00 mm and it is engraved in two sectors of 90° each; one of them for elevation angles (positive ones) and the other one for depression angles (negative ones).

The smallest gradient metering angular division shall be one sexagesimal degree and shall take up an arch a of:

$$a = \frac{\pi \cdot d}{4x90} = \frac{\pi x 40.00}{4x90} = 0.349 mm$$

Clinometric divisions are not equidistant given that they adjust themselves to the tangent trigonometrical function.

It is advisable for the e parallax of the line engraved on the axis of the focusing disc to not exceed e = 5' and is measured by its arch.

In our case it is necessary to take into account loupe magnification that is I = 7x. We may then write:

$$e = \frac{x}{dpp} \cdot I.3,438'$$

where:

$$x = \frac{250x5'}{7.00x3,438'} = 0.05mm$$

It shall thus be necessary to have a 5 hundredths of a millimeter line that falls within optical engraving resolutions, given that they come up to less than two thousandths.

The numbers engraved upon the gradient metering disc shall be duplicated. A band that shall be read by the parietal loupe shall contain the ones that are normally engraved, on the other one, to be used for topographic loupe reading, the numbers shall be arranged upside down.

Limb lighting and transmission factor.

The gradient limb receives external light through the translucent lid covering it and, directly, upon the reading sector, through the prism translucent block.

To calculate the loupe exit beam transmission factor, we proceed as already explained for the compass loupe.

The index change borders existing in the gradient meter prism are:

| Prism surface adjacent the limb | | 1 |
| Loupe exit | | 1 |
| | Total | 2 |

For $n_1$ = 1.50 and n = 1.00:

$$\tau = (\frac{4x1.50x1.00}{(1.50+1.00)^2})^2 = 0.92$$

We must deduct the glass thickness loss equivalent to 1% per glass centimeter. In our case glass thickness is 4.59 cm, causing a 4.59% transmission decrease.

All up the transmittance index is:

$$\tau = 0.92 - 0.046 = 0.874$$

It is a high index that allows comfortable reading even in poor light conditions and despite the beam dividing cube semi-mirrored plane. But in order to optimize clarity, it is advisable to give the prism and loupe a non-reflection treatment.

5. BENEFICIAL EFFECTS OF THIS INVENTION OVER PRIOR ART.

1. Near-by optical viewing of three images that supply collimation, horizontality and bearing in the optical infinitum of the eye.

2. Fast and efficient instrument levelling through the equilibrium of the inertial moment of the magnetic-terrestrial torque of the disc-cylinder of the compass and by the possibility of the operator transmitting it to the whole instrument, orthogonally projecting the visible sector of the graduated cylindrical sheet of the compass upon the rectangular frame and the line-index engraved upon the internal prism surface.

3. Collimation between 0° and ± 90°.

4. Double graded limb, one of them ring shaped and vertical, with optical reading, and the other one horizontal with direct reading.

5. Ring shaped device for simultaneous transposition of the declination and collimator angle to read, at will, magnetic bearings or astronomical azimuths.

6. Pendular optical clinometer with two eyepieces, one of them for angles measured on the vertical plane that pass through the eye of the operator and another one for those that are left outside (parietal geological strata).

6. FIGURE DESCRIPTION.

At the end of this specification are included 4 drawing sheets which contents and details are explained below, with reference to their numbering. The same initial number is maintained whenever the same detail appears in different figures.

Figure 1.    Operational scheme
        1. Instrument placement.
        2. Collimation
        3. Levelling and reading

Figure 2.    Frontal view
        4. Prism-loupe for compass reading.
        5. Planoparallel plate collimator.
        6. Prism-loupe for clinometer reading.
        7. Transposer sheet holding flange.
        8. Hanging ring.

Figure 3.    Back view

Figure 4.    Schematic plan view

Figure 5.    Compass-clinometer section
        9. Magnetic disc-cylinder section.
        10. Clinometric disc section.
        11. Notch that serves as a guide for the transposer ring.
        12. Groove-guide in the compass case.

Figure 6.    Light beam path according to the angle of incidence on the planoparallel glass plate.
        $\varphi$ = Angle of incidence.
        $\varphi'$ = Refraction angle.
        a = Image shift .
        $\Delta$ = Image displacement.

Figure 7.    Graph of the light transfer index in the planoparallel plate collimator (Hecht-Zajac). R = Reflectance.
        $\varphi$ = Angle of incidence.

Figure 8.    Circular loupe collimator.
        13. Circular loupe.
        14. Focusing ring.

Figure 9.    Semi-circular loupe collimator.
        15. Semi-circular loupe.
        16. Focusing semi-circular plate.

Figure 10.    Scheme of the viewing field over the compass cylindrical sheet and loupe focal field depth.
        a = Case wall thickness.
        h = Gap between the cylindrical sheet and the internal case surface.
        e = Longer path of the beam inclined an angle $\omega$ over the window axis.

Figure 11.    Perspective of the magnetic declination angle transposer ring.
        17. Transposer projection housing the prism-loupe and the collimator.
        v = Window communicating the prism-loupe with the compass angular sector.

Figure 12.    Schematic exploded view of the compass case and the beam part reading prism-loupe.
        18. Magnetic disc-cylinder.
        19. Cylindrical compass case wall with sectorial transparent window.

20. Rectangular frame and bearing reading vertical index, engraved on the internal surface of the prism.

Figure 13. Collimation and bearing with the two axes levelled.

Figure 14. Collimation and bearing with the two axes non-levelled.

Figure 15. Collimation and bearing with the N - S axis non-levelled and the E - W axis levelled.

Figure 16. Collimation and bearing with the N - S axis levelled and the E - W axis non-levelled.

Figure 17. Longitudinal section of the clinometer prism-loupe with the beam divider hub and the double reading loupe.

21. Reading loupe in topographical position.

22. Reading loupe in parietal position.

23. Beam dividing hub hypotenuse.

Figure 18. Schematic view of the maximum compass disc-cylinder inclination.

H = Compass case internal height.

h = Magnetic cylindrical sheet height.

r = Magnetic disc radius.

m = Maximum gap between the disc upper plane and the compass lid internal surface.

$\gamma$ = Maximum disc inclination angle.

$\varphi$ = Angle formed by the hypotenuse and the longer side of the maximum triangle projected upon a cylindrical sheet quadrant.

$\phi$ = Maximum inclination angle of the hypotenuse of the fore triangle.

Figure 19. Schematic view of loupe projection upon the feet of the operator.

B = inter-pupil distance.

O = Operative eye projection.

A = Distance from the projection of O to the tip of the shoes.

## 7. BEST WAY TO MAKE THIS INSTRUMENT.

The above explanations and the drawings are sufficient to enable an optical-mechanical workshop to manufacture the instrument. Its approximate dimensions may be those suggested in the calculations for given optical and mechanical parts, and those of the remaining parts shall then adjust themselves to the proportion in respect of the others ascertained from the figures. Regarding materials, anti-magnetic materials must be used to prevent affecting the compass.

Regarding optical glass, an Abbe$\nu$> 50 (Crown) must be selected.

## 8. FORM IN WHICH IT MAY BE APPLIED.

Its usage is very simple. Once the observer knows the given topographical point, he shall then place himself over it leaving it between his feet as shown in figure 20, so that the projection of the bearing reading index may correspond with it.

According to anthropomorphic tests carried out by us, modules A and B vary between:

A: from 4 to 9 cm, according to head inclination

B: from 4.8 to 5.6 cm (one half of the minimum and maximum adult inter-pupil distances + eccentricity).

This requirement shall only be taken into account whenever required by the degree of resolution of the results and this shall be so in very few cases. Placing the operator as it may correspond, he shall direct his view towards the object through the collimator at the same that, with a smooth swinging movement of the vertical axis of the instrument on the collimated plane and another perpendicular to it, it is then achieved that the projection of the parallel lines of the prism window be also parallel to those of the limb and equidistant from them whenever they are observed through a loupe. Said horizontality shall be achieved with a maximum error lesser than 1° with two easy tries, as previously proven. Once the disc plane is kept in the horizontal position, it is then the time to read the bearing through the vertical index.

Both this index and the horizontal and parallel lines stand out because of a conspicuous color, such as red.

In the opposite case, that of aligning an object under a given bearing, we would start off reading that bearing and would then go on with levelling and collimation.

A glance at figures 13 to 16 clarifies what we have just explained.

## Claims

1. MANUAL COMPASS-CLINOMETER (fig. 1 and 3) for eccentric bearing or azimuth measurement, that allows levelling the instrument on its N - S and E - W planes (fig. 13) and collimate the object (fig. 1) under vertical angles between 0° ± 90°, supplying the measurement of the topographical and parietal slopes, with images of reading in the optical infinitum through near-by loupes; made up of two cylindrical cases attached by their base, the upper one contains stabilizing fluid and the magnetic disc (fig. 5/9) which periphery joins it to a cylindrical sheet (fig. 12/18) with angular grading on both, but with the zero origin of the cylinder out of phase one quadrant from the magnetic North.

The reading loupe (4) and the collimator (5) are next to each other, with their optical axes parallel to the N - S plane. It incorporates a peripheral transposer (fig. 11) to cancel out the magnetic declination angle.

The lower case houses the clinometric perpendicular-disc (fig. 5/10) and a double reading loupe upon a beam dividing hub (fig. 3/6).

2. Manual compass-clinometer, as per the foregoing claim, characterized by a simple inversion, right to left, of the number engraved on the grading of the circular sheet so that they may be normally read off after the image inversion caused by the isosceles triangular prism joined to the loupe.

3. Manual compass-clinometer, as per the foregoing claims, characterized because the cylindrical and translucent compass case surface has a transparent window (fig. 12/19) with an angular sector larger than 30° which vertical axis coincides by construction with the zero on the grading of the cylindrical sheet whenever the collimator is aligned with the magnetic North.

4. Manual compass-clinometer, as per the foregoing claims, characterized by the horizontality of the magnetic disc due to the compensation of the inertial moment of its terrestrial magnetic torque, by the damping fluid surrounding it, and by the ability of the operator to transmit said horizontality to the whole instrument, through slight hand movements, until he achieves the orthogonal projection of the visible sector of the graded cylinder, joined to the disc, over the rectangular frame with a greater horizontal base and the vertical central index-line engraved upon the internal surface of the prism-loupe opposite that sector (fig. 12/20). This image coincidence ensures the levelling of the N - S and E - W axes and allows bearing read-off (fig. 13).

5. Manual compass-clinometer, as per claims 1 and 3, characterized by a ring shaped turning sheet that transposes the magnetic declination angle, with an internal notch that fits into a groove around the cylindrical case of the compass (fig. 11/11).

It has a translucent outward projection (fig. 11/17) housing the reading prism-loupe which optical axis is, by its construction, perpendicular to the radius that passes through the limb zero whenever the compass points to the North. The prism-loupe is communicated with the circular graded sector through a window opened on the internal surface of the transposer.

The angular field of the loupe encompasses all the graded sector of the cylindrical limb projected upon the rectangle engraved on the prism (fig. 12/20).

The pole of the ring shaped sheet diametrally across the window is open and ends on two flanges pierced by a pressure regulating screw (fig. 11/7) and one of them carried a ring used to tie a hanging cord (fig 11/8).

6. Manual compass-clinometer, as per claims 1 and 5, characterized by an attached eccentric collimator with central optical axis parallel to that of the reading prism-loupe, with three alterative solutions:

a) Glass planoparallel sheet, not very thick. It allows collimations between 0° and close to ± 90° (fig. 2/5).

b) Spherical loupe, reduced at its not very thick central area, joined by its vertical poles to a semicircular ring made of transparent material and of the same thickness than the former and with a reduced width, in which loupe focusing concavity and along its axis it features a fine engraved line. It allows a 180° angular viewing field.

c) Semi-circular loupe reduced to a narrow central area and joined by its diametral plane to a semi-circular glass planoparallel plate on which loupe focusing periphery has been engraved a fine line in a 180° field (fig. 9).

As a variant of this alternative a claim is also made in respect of the reduced wing collimator of the focuser that decreases its angular field of view.

7.  Manual compass-clinometer, as per claim 1, characterized because the clinometer has a double eyepiece reading prism-loupe over a 90° beam dividing hub that allows reading slopes of between 0° and ± 90°, both topographical through the direct eyepiece as parietal stratigraphic in geological applications through the 90° elbow shaped eyepiece (fig. 17).

8.  Manual compass-clinometer, as per all of the foregoing claims, characterized by its capacity to obtain the bearing and azimuth of any alignment and the topographical or parietal slope of any point and place any object under any bearing, under any slope and from any levelled position observation point, with the instrument held by hand and with all the images in the optical infinitum of the eye.

FiG.1

$\alpha = 169°30'$

FiG.2

FiG.3

FIG.4

FIG.6

FIG.5

R = 0,7
$\varphi$ = 88°30'

n = 1,0
n' = 1,5

$R = \frac{1}{2}(R_{||} + R_{\perp})$

FiG.7

18

FiG. 8

FiG. 9

FIG. 10

FiG. 11

FiG. 12

FiG. 13

FiG. 14

19

FIG. 15

FIG. 16

FIG. 17

FIG. 18

FIG. 19

FIG. 20

# INTERNATIONAL SEARCH REPORT

| A. CLASSIFICATION OF SUBJECT MATTER |
|---|
| IPC 6   G01C17/20 |

According to International Patent Classification (IPC) or to both national classification and IPC

| B. FIELDS SEARCHED |
|---|
| Minimum documentation searched (classification system followed by classification symbols)<br>IPC 6    G01C |
| Documentation searched other than minimum documentation to the extent that such documents are included in the fields searched |
| Electronic data base consulted during the international search (name of data base and, where practical, search terms used) |

## C. DOCUMENTS CONSIDERED TO BE RELEVANT

| Category* | Citation of document, with indication, where appropriate, of the relevant passages | Relevant to claim No. |
|---|---|---|
| A | CH,A,131 841 (E.F.BÜCHLI, SÖHNE) 17 June 1929<br>see the whole document | 1 |
| A | FR,A,1 263 981 (CUNY) 1961<br>see figures 1-3,7 | 1 |
| A | US,A,4 506 950 (CROSSMAN) 26 March 1985<br>see abstract; figures | 1 |
| A | GB,A,149 241 (COLVIN) 9 February 1922<br>see figure 3 | 1 |
| A | DE,A,28 44 280 (WILKIE KIENZLER GMBH & CO)<br>17 April 1980<br>see claim 1 | 1 |

| ☐ Further documents are listed in the continuation of box C. | ☒ Patent family members are listed in annex. |
|---|---|

* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 7 November 1994 | 2 8. 11. 94 |

| Name and mailing address of the ISA<br>European Patent Office, P.B. 5818 Patentlaan 2<br>NL - 2280 HV Rijswijk<br>Tel. (+31-70) 340-2040, Tx. 31 651 epo nl,<br>Fax: (+31-70) 340-3016 | Authorized officer<br><br>Hoekstra, F |
|---|---|

Inte. .onal Application No

PCT/ES 94/00078

| Patent document cited in search report | Publication date | Patent family member(s) | Publication date |
|---|---|---|---|
| CH-A-131841 | | NONE | |
| FR-A-1263981 | | NONE | |
| US-A-4506950 | 26-03-85 | NONE | |
| GB-A-149241 | | NONE | |
| DE-A-2844280 | 17-04-80 | NONE | |